# EUROPÄISCHE PATENTSCHRIFT

(11) **EP 3 172 821 B1**
(45) Veröffentlichungstag und Bekanntmachung des Hinweises auf die Patenterteilung: **16.06.2021**
(21) Anmeldenummer: 15763527.7
(22) Anmeldetag: 04.09.2015
(51) Int. Cl.: H02M 1/088

(54) **LEISTUNGSELEKTRONISCHES SYSTEM ZUM BETREIBEN EINER LAST UND VERFAHREN ZUR SYNCHRONISATION VON LEISTUNGSMODULEN**
POWER ELECTRONIC SYSTEM FOR OPERATING A LOAD, AND METHOD FOR SYNCHRONIZING LOAD MODULES
SYSTÈME ÉLECTRONIQUE DE PUISSANCE POUR FAIRE FONCTIONNER UNE CHARGE ET PROCÉDÉ DE SYNCHRONISATION DE MODULES DE PUISSANCE

(30) Priorität: 08.09.2014 DE 102014217882
(43) Veröffentlichungstag der Anmeldung: 31.05.2017
(73) Patentinhaber: Siemens Aktiengesellschaft, 80333 München (DE)
(72) Erfinder: GALEK, Marek, 82398 Polling (DE)
(86) Internationale Anmeldenummer: PCT/EP2015/070269
(87) Internationale Veröffentlichungsnummer: WO 2016/037944

(56) Entgegenhaltungen:
- EP-A1- 2 458 726
- WO-A1-2013/110273

## Beschreibung

Die Erfindung betrifft ein leistungselektronisches System, insbesondere einen Konverter, zum Betreiben einer Last. Die Erfindung betrifft ferner ein Verfahren zur Synchronisation von Leistungsmodulen eines solchen leistungselektronischen Systems zum Betreiben einer Last.

Leistungselektronische Systeme, wie z.B. M2C- oder MHF-Inverter, mehrphasige Buck/Boost- oder DC/DC-Wandler, werden zunehmend aus modularisierten Komponenten aufgebaut. Die Flexibilität der Verschaltung einzelner Komponenten oder Leistungsmodule wird dabei jedoch durch die derzeitige Anzahl der zur Verfügung stehenden Kommunikationsschnittstellen einer übergeordneten Steuerung begrenzt. Derzeitige leistungselektronische Systeme weisen typischerweise eine Stern-Topologie auf, bei der die Leistungsmodule über eine Punkt-zu-Punkt-Kommunikation mit der übergeordneten Steuerung verbunden sind. Dies erlaubt zwar eine einfache Synchronisierung der einzelnen Leistungsmodule, limitiert jedoch die maximale Anzahl der Leistungsmodule, welche von der Anzahl der Steuerausgänge der übergeordneten Steuerung abhängt.

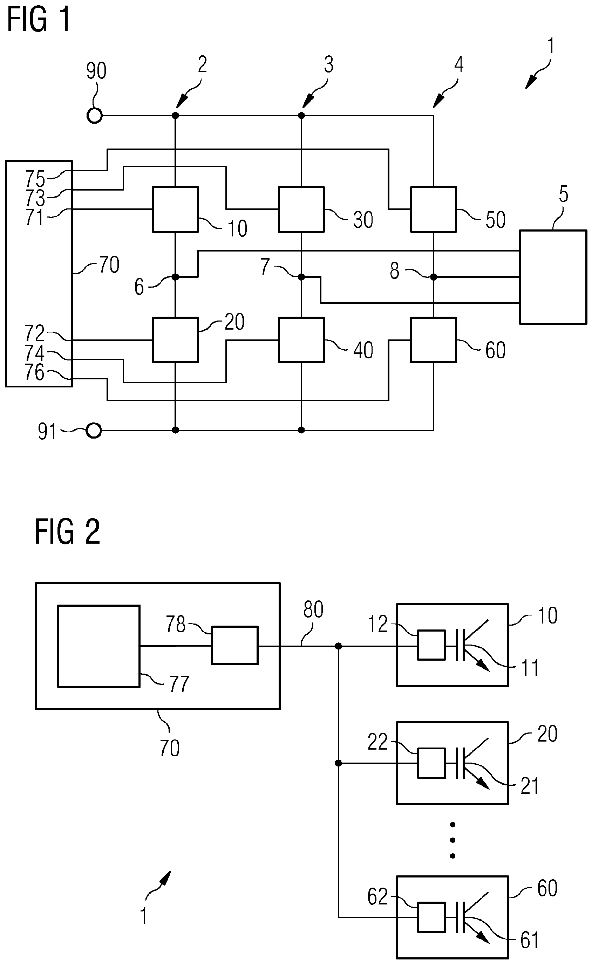

Fig. 1 zeigt beispielhaft eine derzeit eingesetzte typische Verschaltung eines als Drehstromumrichter ausgebildeten leistungselektronischen Systems 1 zum Ansteuern einer dreiphasigen Last 5. Der Drehstromumrichter umfasst in einer dem Fachmann bekannten Weise sechs Leistungsmodule 10, ..., 60. Jedes Leistungsmodul 10, ..., 60 umfasst beispielsweise ein oder mehrere Schaltelemente (z.B. IGBTs, Insulated Gate Bipolar Transistor) sowie eine lokale Ansteuerung für das oder die Schaltelemente. Grundsätzlich könnten als Schaltelemente auch Feldeffekt-gesteuerte Halbleiterschaltelemente oder andere Arten von Bipolartransistoren zum Einsatz kommen. Bei einer Mehrzahl an Schaltelementen pro Leistungsmodul können diese in gewünschter Weise parallel und/oder seriell miteinander verschaltet sein.

Die Drehstrombrücke umfasst drei parallel an Versorgungspotentialanschlüsse 90, 91 angeschlossene Zweige 2, 3, 4. In dem ersten Zweig 2 sind die Leistungsmodule 10 und 20 seriell zwischen den Versorgungspotentialanschlüssen 90, 91 miteinander verschaltet. In dem zweiten Zweig 3 sind die Leistungsmodule 30 und 40 seriell zwischen den Versorgungspotentialanschlüssen 90, 91 verschaltet. In dem dritten Zweig 4 sind die Leistungsmodule 50 und 60 zwischen den Versorgungspotentialanschlüssen 90 und 91 verschaltet. An dem Versorgungspotentialanschluss 90 liegt z.B. ein positives Spannungspotential, während an dem Versorgungspotentialanschluss 91 ein negatives Spannungspotential anliegt. Zwischen den Versorgungspotentialanschlüssen 90, 91 liegt eine Gleichspannung an, welche beispielsweise von einem Energiespeicher oder einem Energieversorgungsnetz mit entsprechender Gleichrichteranordnung bereit gestellt wird. Die Knotenpunkte 6, 7, 8 zwischen den Leistungsmodulen 10, 20 bzw. 30, 40 bzw. 50, 60 sind jeweils mit den Phasen der dreiphasigen Last 5, z.B. einer Antriebsmaschine, verbunden.

Die Ansteuerung der Leistungsmodule 10, ..., 60 erfolgt gemäß einem vorgegebenen Schaltzustandsmuster mittels einer übergeordneten Steuerung 70. Diese weist jeweilige Steuerausgänge 71, ..., 76 auf, um die jeweiligen Leistungsmodule 10, ..., 60 entsprechend leitend oder sperrend zu schalten. Das Schaltzustandsmuster weist im vorliegenden Ausführungsbeispiel zumindest drei unterschiedliche Schaltzustände des Drehstromumrichters auf, wobei ein Schaltzustand zu einem gegebenen Zeitpunkt eine erste Teilanzahl an leitend geschalteten Leistungsmodulen und eine zweite Schaltanzahl an sperrend geschalteten Leistungsmodulen umfasst. Die Steuersignale für die Schaltmodule 10, ..., 60 für einen bestimmten Schaltzustand werden durch die übergeordnete Steuerung 70 zeitgleich an die Steuerausgänge 71, ..., 76 gelegt. Hierdurch ist sichergestellt, dass sämtliche Leistungsmodule eine gemeinsame Zeitbasis verwenden.

Beispielsweise sind in einem ersten Schaltzustand das Leistungsmodul 10 in dem ersten Zweig 2 und die Leistungsmodule 40 und 60 in dem zweiten Zweig 3 und dem dritten Zweig 4 leitend geschaltet. Dementsprechend sind in diesem Schaltzustand die Leistungsmodule 30, 50, 20 sperrend geschaltet. In einem zweiten Schaltzustand sind beispielsweise die Leistungsmodule 30, 20 und 60 leitend geschaltet, während die Schaltmodule 10, 50, 40 sperrend geschaltet sind. In einem dritten Schaltzustand sind die Leistungsmodule 50, 20, 40 leitend geschaltet, während die Leistungsmodule 10, 30, 60 sperrend geschaltet sind. Anschließend werden die Schaltzustände in der genannten Reihenfolge wiederholt.

Weist jedes der Leistungsmodule 10, ..., 60 jeweils ein einzelnes Schaltelement auf, so sind in der übergeordneten Steuerung 70, wie in Fig. 1 dargestellt sechs Steuerausgänge 71, ..., 76 vorzusehen. Weisen die Schaltmodule 10, ..., 60 demgegenüber bereits zwei oder mehr Schaltelemente auf, so wird je nach Verschaltung der Schaltelemente in einem jeweiligen Leistungsmodul unter Umständen eine größere Anzahl an Steuerausgängen der übergeordneten Steuerung 70 benötigt, um eine entsprechende Ansteuerung realisieren zu können.

Je nach Ausgestaltung des leistungselektronischen Systems 1 kann dieses eine Vielzahl an unterschiedlichen Schaltelementen umfassen, so dass eine entsprechende Anzahl an Steuerausgängen in der übergeordneten Steuerung vorzusehen ist. Dies erfordert entweder die spezielle Anpassung der übergeordneten Steuerung 70 oder aber den Verzicht auf eine Modularisierung des leistungselektronischen Systems.

Aufgrund der beschriebenen Problematik gibt es Bestrebungen, die Leistungsmodule mittels eines Bussystems zu vernetzen. Diese Vernetzung kann sowohl in Form kabelverbundener Gerätebusse als auch in Form eines drahtlosen Funknetzes realisiert werden. Die Verwendung eines Bussystems ermöglicht die Reduzierung der Anzahl der benötigten Steuerleitungen und hilft, eine physikalische Begrenzung der maximalen Teilnehmerzahl zu vermeiden.

Ein sich aus der Vernetzung über ein Bussystem ergebendes Problem besteht darin, dass die Synchronisierung der einzelnen Leistungsmodule und der darin enthaltenen Schaltelemente schwierig ist. Dabei ist zu berücksichtigen, dass die lokale Ansteuerung eines jeweiligen Leistungsmoduls aus wirtschaftlichen Gründen keine komplexen Berechnungen zulässt. Daher wird bei leistungselektronischen Systemen, welche ein Bussystem zur Kommunikation der Komponenten des Systems benutzen, eine Synchronisierung mittels einer zusätzlichen Synchronisationsleitung realisiert. Hierdurch wird jedoch ein Teil der eingesparten Leitungskomplexität wieder für die Synchronisierung der Leistungsmodule aufgebraucht.

Aus der WO 2013/110273 A1 ist ein leistungselektronisches System für eine Windturbine bekannt. Das System umfasst eine Anzahl an Leistungsmodulen mit einer jeweiligen Ansteuerung für eine Anzahl an Schaltelementen. Eine übergeordnete Steuerung ist über eine Echtzeit-Busleitung mit den Ansteuerungen der Leistungsmodule verbunden. Über die Echtzeit-Busleitung wird von der übergeordneten Steuerung ein synchrones Zeitsignal an die Ansteuerungen der Leistungsmodule übertragen, um die Erzeugung eines jeweiligen Uhrensignals in den Ansteuerungen der Leistungsmodule zeitlich zu synchronisieren.

Aus der EP 2 458 726 A1 ist ein leistungselektronisches System bekannt, das eine Anzahl an Leistungsmodulen und eine übergeordnete Steuerung umfasst, wobei die übergeordnete Steuerung mit den nach dem Daisy-Chain-Prinzip verschalteten Leistungsmodulen über faseroptische Kabel kommuniziert. Eine Synchronisation der Leistungsmodule erfolgt mithilfe eines Signalrahmens, in dem eine Carrier-Nummer übertragen wird, welche durch die Leistungsmodule ausgewertet wird.

Die US 2008/052551 A1 offenbart ein leistungselektronisches System mit einer Mehrzahl von programmierbaren Spannungsreglern. Die Mehrzahl an Spannungsreglern ist über ein Bussystem an eine übergeordnete Steuerung angeschlossen. Zur synchronen Übertragung von Informationen von der übergeordneten Steuerung an die programmierbaren Spannungsregler wird ein Uhrensignal genutzt.

Es ist Aufgabe der vorliegenden Erfindung, ein leistungselektronisches System sowie ein Verfahren zur Synchronisation von Leistungsmodulen anzugeben, welche in Bezug auf eine Synchronisierung ihrer Leistungsmodule baulich und/oder funktional verbessert sind.

Diese Aufgaben werden gelöst durch ein leistungselektronisches System gemäß den Merkmalen des Patentanspruchs 1 und ein Verfahren gemäß den Merkmalen des Patentanspruchs 9. Vorteilhafte Ausgestaltungen ergeben sich aus den abhängigen Patentansprüchen.

Gemäß einem ersten Aspekt der vorliegenden Erfindung wird ein leistungselektronisches System zum Betreiben einer Last vorgeschlagen. Das leistungselektronische System kann beispielsweise in Gestalt eines zellbasierten Konverters, wie z.B. einen M2C- oder einem MHF-Interver, realisiert sein. Das leistungselektronische System kann auch ein Buck/Boost-Wandler oder ein DC/DC- oder ein AC/DC-Wandler sein.

Ein solches System umfasst eine Anzahl an Leistungsmodulen, die in vorgegebener Weise mit der Last verschaltet ist, wobei jedes der Leistungsmodule zumindest ein Schaltelement und eine lokale Ansteuerung umfasst. Ein Leistungsmodul kann nicht nur durch ein einzelnes Schaltelement oder eine Mehrzahl an seriell und/oder parallel verschalteten Schaltelementen bestehen, sondern ein Leistungsmodul kann selbst durch einen Konverter repräsentiert sein.

Das leistungselektronische System umfasst weiter eine übergeordnete Steuerung zur Abgabe von geeigneten Steuersignalen zur Ansteuerung der Anzahl an Leistungsmodulen zum Betreiben der Last. Die Last kann beispielsweise ein Antrieb oder dergleichen sein.

Das System umfasst weiter einen Gerätebus, an dem die übergeordnete Steuerung und die Anzahl an Leistungsmodulen angeschlossen sind und über den im Betrieb des Systems die Steuersignale zur Ansteuerung der Anzahl an Leistungsmodulen übertragen werden bzw. übertragbar sind.

Die übergeordnete Steuerung ist dazu ausgebildet, die Steuersignale zur Ansteuerung der Anzahl an Leistungsmodulen für die Schaltzustände des Systems in jeweiligen Telegrammen in vorgegebenen Zeitabständen über den Gerätebus an die Anzahl an Leistungsmodulen zu übertragen. Ein Schaltzustand umfasst zu einem gegebenen Zeitpunkt eine erste Teilanzahl an leitend geschalteten Leistungsmodulen bzw. Schaltelementen jeweiliger Leistungsmodule und eine zweite Teilanzahl an sperrend geschalteten Leistungsmodulen bzw. Schaltelementen jeweiliger Leistungsmodule. Für den Betrieb des leistungselektronischen Systems sind mehrere unterschiedliche Schaltzustände erforderlich, wobei die Anzahl der unterschiedlichen Schaltzustände abhängig von der Verschaltung des leistungselektronischen Systems und der zu betreibenden Last sind. Für eine dreiphasige Last und einen dreiphasigen Umrichter sind beispielsweise zumindest drei unterschiedliche Schaltzustände erforderlich. Die Anzahl der Schaltzustände hängt zudem von der Anzahl an Schaltelementen in einem jeweiligen Leistungsmodul ab.

Alle Leistungsmodule sind ferner dazu ausgebildet, eine erste Kommunikationsflanke eines jeweils empfangenen Telegramms der Steuerung abzutasten und als gemeinsame Zeitbasis des Systems für die Verarbeitung der Steuersignale zu verarbeiten.

Ein derart ausgebildetes leistungselektronisches System benötigt zur Synchronisierung der Leistungsmodule keine zusätzliche Synchronisationsleitung. Vielmehr wird die Synchronisierung aus den über den Gerätebus übertragenen Daten abgeleitet. Insbesondere kann eine Ableitung eines Synchronisationssignals auf unterster Bit-Ebene erfolgen, wodurch keine aufwendigen Busprotokolle erforderlich sind. Im Ergebnis können die Vorteile einer gängigen Stern-basierten Kommunikation hinsichtlich der Synchronisierung mit den Vorteilen eines Netzwerkes verbunden werden. Die Synchronisation der Leistungsmodule kann dabei ohne Mehraufwand, wie Rechenzeit oder zusätzliche Hardware, erzielt werden. Das vorgeschlagene leistungselektronische System ist insbesondere für stückzahlintensive Produkte, wie zellbasierte Konverter, interessant.

Gemäß einer weiteren Ausgestaltung ist die übergeordnete Steuerung dazu ausgebildet, die Telegramme in regelmäßigen Zeitabständen auszusenden. Dies bedeutet, die Telegramme werden mit einer konstanten Periodendauer über den Gerätebus an die an den Gerätebus angeschlossenen Leistungsmodule übertragen.

Eine weitere Ausgestaltung sieht vor, dass die von der Steuerung über den Gerätebus übertragenen Telegramme bei konstanter Periodendauer eine gleiche oder alternativ eine unterschiedliche Länge aufweisen.

In den Pausen zwischen den Telegrammen können von einem Leistungsmodul ausgesendete Rücktelegramme über den Gerätebus an die Steuerung übertragen werden. Hierdurch wird eine bidirektionale Kommunikation zwischen der übergeordneten Steuerung und den Leistungsmodulen ermöglicht.

Die Leistungsmodule sind gemäß einer weiteren Ausgestaltung jeweils dazu ausgebildet, nach der Abtastung der ersten Kommunikationsflanke eines jeweils empfangenen Telegramms der Steuerung einen Synchronisationspuls zu erzeugen und diesen in der jeweiligen lokalen Ansteuerung als Zeitbasis zu verarbeiten. Da die an den Gerätebus angeschlossenen Leistungsmodule das von der Steuerung ausgesendete Telegramm zur gleichen Zeit (oder jedenfalls lediglich mit minimaler Verzögerung) empfangen, können die Leistungsmodule zeitgleich die Abtastung der ersten Kommunikationsflanke des Telegramms vornehmen. Infolgedessen erzeugt die lokale Ansteuerung einen jeweiligen Synchronisationspuls, welcher dann als gemeinsame Zeitbasis aller Leistungsmodule verwendet wird. Hierdurch sind die Leistungsmodule zur Durchführung ihrer Aufgaben perfekt synchronisiert.

Gemäß einer weiteren Ausgestaltung sind die Leistungsmodule jeweils dazu ausgebildet, die in einem Telegramm, das in einer Periode über den Gerätebus übertragen wird, enthaltenen Steuersignale nach der Abtastung der auf diese Periode folgenden Kommunikationsflanke und der Ermittlung der Zeitbasis in der darauf folgenden zweiten Periode auszuführen. Hierdurch wird sichergestellt, dass die in einem Telegramm enthaltenen Steuersignale für einen bestimmten Schaltzustand durch alle Leistungsmodule vollständig empfangen wurden. Dadurch, dass die Ausführung der Steuersignale erst in der darauf folgenden Periode erfolgt, zu deren Beginn wiederum ein Synchronisationspuls erzeugt wurde, besteht eine gleiche Zeitbasis bei allen Leistungsmodulen. Hierdurch kann eine bestmögliche Synchronität gewährleistet werden.

Gemäß einem zweiten Aspekt der vorliegenden Erfindung wird ein Verfahren zur Synchronisation von Leistungsmodulen eines leistungselektronischen Systems, insbesondere eines Konverters, zum Betreiben einer Last vorgeschlagen. Das System ist dabei, wie oben beschrieben, ausgestaltet. Bei dem Verfahren werden Steuersignale zur Ansteuerung der Anzahl an Leistungsmodulen für die Schaltzustände des Systems in jeweiligen Telegrammen in vorgegebenen Zeitabständen von der Steuerung über den Gerätebus an die Anzahl an Leistungsmodulen übertragen. Eine erste Kommunikationsflanke eines jeweils empfangenen Telegramms der Steuerung wird abgetastet und als eine gemeinsame Zeitbasis des Systems für die Verarbeitung der Steuersignale verarbeitet.

Das erfindungsgemäße Verfahren weist die gleichen Vorteile auf, wie diese vorstehend in Verbindung mit dem erfindungsgemäßen System beschrieben wurden.

Gemäß einer zweckmäßigen Ausgestaltung werden die Telegramme in regelmäßigen Zeitabständen ausgesendet. Hierdurch ergibt sich eine konstante Periodendauer, unabhängig von einer gleichen oder unterschiedlichen Länge der Telegramme.

Gemäß einer weiteren Ausgestaltung weisen die von der Steuerung von dem Gerätebus übertragenen Telegramme bei konstanter Periodendauer eine gleiche oder eine unterschiedliche Länge auf.

Eine weitere Ausgestaltung des Verfahrens sieht vor, dass in den Pausen zwischen den Telegrammen von einem Leistungsmodul ausgesendete Rücktelegramme über den Gerätebus an die Steuerung übertragen werden.

Eine weitere Ausgestaltung des Verfahrens sieht vor, dass die Leistungsmodule nach der Abtastung der ersten Kommunikationsflanke eines jeweils empfangenen Telegramms der Steuerung einen Synchronisationspuls erzeugen und diesen in der jeweiligen lokalen Ansteuerung als Zeitbasis verarbeiten.

In einer weiteren Ausgestaltung ist vorgesehen, dass die Leistungsmodule, die in einem Telegramm, das in einer Periode über den Gerätebus übertragen wird, enthaltenen Steuersignale nach der Abtastung der auf diese Periode folgenden Kommunikationsflanke und der Ermittlung der Zeitbasis in der darauffolgenden zweiten Periode ausführen.

Die Erfindung wird nachfolgend näher anhand eines Ausführungsbeispiels in der Zeichnung erläutert. Es zeigen:
- Fig. 1: eine schematische Darstellung eines aus dem Stand der Technik bekannten leistungselektronischen Systems;
- Fig. 2: eine schematische Darstellung eines erfindungsgemäßen elektronischen Systems; und
- Fig. 3: eine schematische Darstellung einer Kommunikation auf einem Gerätebus des leistungselektronischen Systems von Fig. 2.

In den Figuren sind gleiche Elemente mit gleichen Bezugszeichen versehen.

Fig. 2 zeigt eine schematische Darstellung eines Teils eines erfindungsgemäßen leistungselektronischen Systems. Das in Fig. 2 dargestellte leistungselektronische System 1 weist eine Anzahl an Leistungsmodulen 10, 20, ..., 60 auf. Da die Verschaltung der Leistungsmodule 10, ..., 60 untereinander und mit einer ebenfalls nicht dargestellten Last für die vorliegende Erfindung von nachrangiger Bedeutung ist, wurde auf eine entsprechende, konkrete Darstellung verzichtet.

Jedes der Leistungsmodule 10, ..., 60 weist lediglich exemplarisch ein Schaltelement 11, ..., 61 sowie eine lokale Ansteuerung 12, ..., 62 auf. Die jeweilige lokale Ansteuerung 12, ..., 62 ist an einen Gerätebus 80 angeschlossen und empfängt über diesen ein für das betreffende Leistungsmodul 10, ..., 60 vorgesehenes Steuersignal zur Ansteuerung des oder der Schaltelemente 11, ..., 61. Die jeweiligen lokalen Ansteuerungen 12, ..., 62 können in Gestalt eines Mikrocontrollers, eines FPGAs (Field Programable Gate Array) oder als ASIC (Application Specific Intergrated Curcuit) realisiert sein.

An den Gerätebus 80 ist ferner die in Verbindung mit Fig. 1 bereits beschriebene zentrale Steuerung angeschlossen. Die zentrale Steuerung 70 umfasst eine Recheneinheit 77 zur Erzeugung von Steuersignalen für die Leistungsmodule 10, ..., 60. Die Recheneinheit 77 kann beispielsweise als Mikrocontroller, FPGA oder ASIC ausgebildet sein. Die Recheneinheit 77 ist mit einem Codierer 78 verbunden, über den die zentrale Recheneinheit 70 an den Gerätebus 80 angeschlossen ist. Der Codierer 78 erzeugt aus den von der Recheneinheit 77 erhaltenen Daten für einen Schaltzustand ein Telegramm, in dem sämtliche zur Ansteuerung der Anzahl an Leistungsmodulen 10, ..., 60 erforderlichen Steuersignale enthalten sind. Die Steuersignale enthalten Stellwerte für die jeweiligen Leistungsmodule 10, ..., 60 bzw. die darin enthaltenen Schaltelemente. Derart erzeugte Telegramme werden in vorgegebenen Zeitabständen, bevorzugt mit konstanter Periodendauer T, über den Gerätebus 80 an die Anzahl an Leistungsmodulen 10, ..., 60 übertragen.

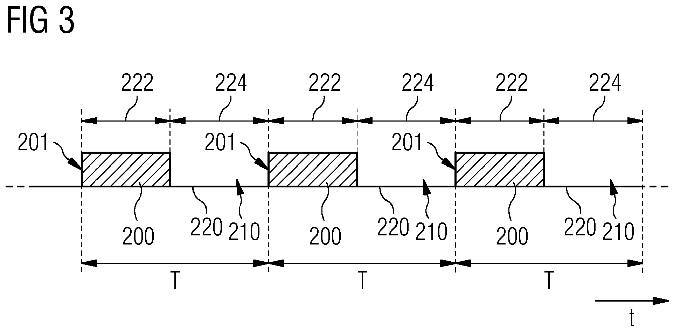

In Fig. 3, welche in schematischer Darstellung eine über den Gerätebus 70 realisierte Kommunikation darstellt, sind exemplarisch drei zeitlich hintereinander an den Gerätebus 70 gelegte Telegramme 200 dargestellt. Jede Periode 220 weist eine Periodendauer T auf. Beispielhaft weisen die über den Gerätebus 80 übertragenen Telegramme 200 eine gleiche Länge auf, wobei die Dauer des Telegramms 200 mit dem Bezugszeichen 222 gekennzeichnet ist. Aus der Differenz der Periodendauer T und der konstanten Dauer 222 des Telegramms 200 ergibt sich eine ebenfalls konstante Dauer 224 einer Pause 210. Obwohl es in Fig. 3 den Anschein hat, als wären die Dauer 222 der Übertragung des Telegramms 200 und die Dauer 224 der Pause 210 einer jeweiligen Periode 220 in etwa gleich lang, so ist dies lediglich exemplarisch und nicht zwingend.

Die Leistungsmodule 10, ..., 60 bzw. deren jeweilige lokale Ansteuerungen 12, ..., 62 sind dazu ausgebildet, eine erste Kommunikationsflanke 201 jedes empfangenen Telegramms 200 abzutasten. In Folge der Abtastung der ersten Kommunikationsflanke 201 eines jeweils empfangenen Telegramms wird durch jedes Leistungsmodul 10, ..., 60 bzw. jede lokale Ansteuerung 12, ..., 62 ein Synchronisationspuls erzeugt, der in der jeweiligen lokalen Ansteuerung als Zeitbasis verarbeitet wird. Da sämtliche Leistungsmodule 10, ..., 60 ein gerade an den Gerätebus 80 anliegendes Telegramm 200 zum gleichen Zeitpunkt empfangen, erfolgt auch die Abtastung mit der ersten Kommunikationsflanke 201 und die Erzeugung des Synchronisationspulses zur gleichen Zeit, so dass der Synchronisationspuls für jede Periode als gemeinsame Zeitbasis verwendet wird.

Aus Fig. 3 ist ohne Weiteres ersichtlich, dass die ansteigende Kommunikationsflanke des Telegramms 200 durch die Leistungsmodule 10, ..., 60 bzw. deren lokale Ansteuerungen 12, ..., 62 ausgewertet wird.

Das Problem der fehlenden Zeitbasis in einem leistungselektronischen System, das keine separate Synchronisationsleitung aufweist, wird gemäß dem Vorschlag der vorliegenden Erfindung durch die Ausnutzung des Puls-Pausen-Verhältnisses innerhalb des über den Gerätebus 80 übertragenen Datenstromes realisiert. Die Erzeugung des Synchronisationspulses kann z.B. durch einen Zustandsautomaten einer jeweiligen lokalen Ansteuerung übernommen werden.

Die Pause 224 einer jeweiligen Periode 220 kann in einer weiteren Ausgestaltung von den Leistungsmodulen 10, ..., 60 dazu genutzt werden, mittels eines figürlich nicht dargestellten Rücktelegramms eine Information an die übergeordnete Steuerung 70 zu übermitteln. Dazu ist es zweckmäßig, wenn ein Leistungsmodul, das eine Information an die übergeordnete Steuerung 70 übertragen möchte, nach dem Empfang eines Telegramms 200 so schnell wie möglich antwortet. Unabhängig davon kann die zentrale Steuerung 70 eine Kommunikation erst nach dem Ablaufen der fest vorgegebenen Zeitperiode T anstoßen und ein weiteres Telegramm 200 aussenden. Die konstante Periodendauer T bildet damit die Zeitbasis der an den Gerätebus 70 angeschlossenen Komponenten, d.h. der Leistungsmodule 10, ..., 60.

Die Erzeugung des Synchronisationspulses basierend auf der Abtastung der ersten Kommunikationsflanke des Telegramms 200 ist unabhängig von den in den lokalen Ansteuerungen 12, ..., 62 enthaltenen Zustandsautomaten, der die optimale weitere Kommunikationsabwicklung übernimmt. Der Zustandsautomat, der, wie beschrieben, die Erzeugung des Synchronisationspulses übernimmt, wird durch eine eventuelle Rückkommunikation von den Leistungsmodulen zu der zentralen Steuerung auf dem Gerätebus 80 im Reset gehalten und erst nach dem Erkennen eines inaktiven Zustands des Gerätebusses aktiviert. Hierzu kann beispielsweise ein Reset-Timer realisiert werden. Dies bedeutet, dass, im Falle der Realisierung einer Kommunikation von den Leistungsmodulen zu der zentralen Steuerung 70 zwischen dem Rücktelegramm und dem Ende der Periode eine Lücke vorgegebener Länge (nicht dargestellt) vorhanden sein muss, um die erste Kommunikationsflanke des nachfolgend empfangenen Telegramms 200 erkennen zu können.

Das vorgeschlagene Vorgehen ermöglicht in einem System, bei dem eine Abtastung mit 100 MHz erfolgt, einen Gleichlauf im Bereich von +- 15 ns, ohne dass zusätzliche Hardware in den lokalen Ansteuerungen oder Rechenzeit in den Ansteuerungen benötigt wird.

## Patentansprüche

1. Leistungselektronisches System, insbesondere Konverter, zum Betreiben einer Last (5), umfassend:
- eine Anzahl an Leistungsmodulen (10, .., 60), die in vorgegebener Weise mit der Last (5) verschaltet ist, wobei jedes der Leistungsmodule (10, .., 60) zumindest ein Schaltelement (11, .., 61) und eine lokale Ansteuerung (12, .. 62) umfasst;
- eine übergeordnete Steuerung (70) zur Abgabe von geeigneten Steuersignalen zur Ansteuerung der Anzahl an Leistungsmodulen (10, .. 60) zum Betreiben der Last (5);
- einen Gerätebus (80), an den die übergeordnete Steuerung (70) und die Anzahl an Leistungsmodulen (10, .., 60) angeschlossen sind und über den im Betrieb des Systems (1) die Steuersignale zur Ansteuerung der Anzahl an Leistungsmodulen (10, .., 60) übertragen werden bzw. übertragbar sind,
**dadurch gekennzeichnet, dass**
- die übergeordnete Steuerung (70) dazu ausgebildet ist, die Steuersignale zur Ansteuerung der Anzahl an Leistungsmodulen (10, .., 60) für die Schaltzustände des Systems (1) in jeweiligen Telegrammen (200) in vorgegebenen Zeitabständen (T) über den Gerätebus (80) an die Anzahl an Leistungsmodulen (10, .., 60) zu übertragen,
- alle Leistungsmodule (10, .., 60) dazu ausgebildet sind, eine erste Kommunikationsflanke (201) eines jeweils empfangenen Telegramms (200) der Steuerung (70) abzutasten und als gemeinsame Zeitbasis des Systems (1) für die Verarbeitung der Steuersignale zu verarbeiten.

2. System nach Anspruch 1, bei dem das Leistungsmodul (10, ..., 60) ein Konverter ist.

3. System nach Anspruch 1, bei dem das Leistungsmodul (10, .., 60) ein einzelnes steuerbares Schaltelement ist oder eine Mehrzahl an seriell und/oder parallel verschalteten Einzel-Schaltelementen ist.

4. System nach einem der vorhergehenden Ansprüche, bei dem die Steuerung dazu ausgebildet ist, die Telegramme (200) in regelmäßigen Zeitabständen auszusenden.

5. System nach einem der vorhergehenden Ansprüche, bei dem die von der Steuerung (70) über den Gerätebus (80) übertragenen Telegramme (200) bei konstanter Periodendauer eine gleiche oder eine unterschiedliche Länge aufweisen.

6. System nach einem der vorhergehenden Ansprüche, bei dem in den Pausen (210) zwischen den Telegrammen (200) von einem Leistungsmodul (10, .., 60) ausgesendete Rücktelegramme über den Gerätebus (80) an die Steuerung (70) übertragbar sind.

7. System nach einem der vorhergehenden Ansprüche, bei dem die Leistungsmodule (10, .., 60) jeweils dazu ausgebildet sind, nach der Abtastung der ersten Kommunikationsflanke (201) eines jeweils empfangenen Telegramms (200) der Steuerung (70) einen Synchronisationspuls zu erzeugen und diesen in der jeweiligen lokalen Ansteuerung als Zeitbasis zu verarbeiten.

8. System nach einem der vorhergehenden Ansprüche, bei dem die Leistungsmodule (10, .., 60) jeweils dazu ausgebildet sind, die in einem Telegramm, das in einer ersten Periode über den Gerätebus (80) übertragen wird, enthaltenen Steuersignale nach der Abtastung der auf diese Periode folgenden Kommunikationsflanke und der Ermittlung der Zeitbasis in der darauf folgenden zweiten Periode auszuführen.

9. Verfahren zur Synchronisation von Leistungsmodulen (10, .., 60) eines leistungselektronischen Systems (1), insbesondere eines Konverters, zum Betreiben einer Last (5), wobei das System (1) gemäß einem der Ansprüche 1 bis 8 ausgestaltet ist,
**dadurch gekennzeichnet, dass**
- die Steuersignale zur Ansteuerung der Anzahl an Leistungsmodulen (10, .., 60) für die Schaltzustände des Systems (1) in jeweiligen Telegrammen (200) in vorgegebenen Zeitabständen (T) von der Steuerung (70) über den Gerätebus (80) an die Anzahl an Leistungsmodulen (10, .., 60) übertragen werden, und
- eine erste Kommunikationsflanke (201) eines jeweils empfangenen Telegramms (200) der Steuerung (70) abgetastet und als gemeinsame Zeitbasis des Systems (1) für die Verarbeitung der Steuersignale verarbeitet wird.

10. Verfahren nach Anspruch 9, bei dem die Telegramme (200) in regelmäßigen Zeitabständen ausgesendet werden.

11. Verfahren nach Anspruch 9 oder 10, bei dem die von der Steuerung (70) über den Gerätebus (80) übertragenen Telegramme (200) bei konstanter Periodendauer eine gleiche oder eine unterschiedliche Länge aufweisen.

12. Verfahren nach einem der Ansprüche 9 bis 11, bei dem in den Pausen (210) zwischen den Telegrammen (200) von einem Leistungsmodul (10, .., 60) ausgesendete Rücktelegramme über den Gerätebus (80) an die Steuerung (70) übertragen werden.

13. Verfahren nach einem der Ansprüche 9 bis 12, bei dem die Leistungsmodule (10, .., 60) nach der Abtastung der ersten Kommunikationsflanke (201) eines jeweils empfangenen Telegramms (200) der Steuerung (70) einen Synchronisationspuls erzeugen und diesen in der jeweiligen lokalen Ansteuerung als Zeitbasis verarbeiten.

14. Verfahren nach einem der Ansprüche 9 bis 13, bei dem die Leistungsmodule (10, .., 60) die in einem Telegramm, das in einer ersten Periode über den Gerätebus (80) übertragen wird, enthaltenen Steuersignale nach der Abtastung der auf diese Periode folgenden Kommunikationsflanke und der Ermittlung der Zeitbasis in der darauf folgenden zweiten Periode ausführen.

## Claims

1. Power electronic system, in particular converter, for operating a load (5), comprising:
- a number of power modules (10, .., 60) connected to the load (5) in a predefined manner, each of the power modules (10, .., 60) comprising at least one switching element (11, .., 61) and a local actuator (12, .., 62);
- a superordinate controller (70) for outputting suitable control signals for actuating the number of power modules (10, .., 60) to operate the load (5);
- a device bus (80), to which the superordinate controller (70) and the number of power modules (10, .., 60) are connected and via which the control signals for actuating the number of power modules (10, .., 60) are or can be transmitted during operation of the system (1),
**characterized in that**
- the superordinate controller (70) is designed to transmit the control signals for actuating the number of power modules (10, .., 60) for the switching states of the system (1) in respective messages (200) at predefined intervals of time (T) to the number of power modules (10, .., 60) via the device bus (80),
- all power modules (10, .., 60) are designed to scan a first communication edge (201) of a respectively received message (200) from the controller (70) and to process it as a common time base of the system (1) for processing the control signals.

2. System according to Claim 1, in which the power module (10, ..., 60) is a converter.

3. System according to Claim 1, in which the power module (10, .., 60) is an individual controllable switching element or a plurality of individual switching elements connected in series and/or in parallel.

4. System according to one of the preceding claims, in which the controller is designed to emit the messages (200) at regular intervals of time.

5. System according to one of the preceding claims, in which the messages (200) transmitted by the controller (70) via the device bus (80) have an identical or different length for a constant period duration.

6. System according to one of the preceding claims, in which return messages emitted by a power module (10, .., 60) can be transmitted to the controller (70) via the device bus (80) in the pauses (210) between the messages (200).

7. System according to one of the preceding claims, in which the power modules (10, .., 60) are each designed to generate a synchronization pulse after scanning the first communication edge (201) of a respectively received message (200) from the controller (70) and to process said synchronization pulse as a time base in the respective local actuator.

8. System according to one of the preceding claims, in which the power modules (10, .., 60) are each designed to execute the control signals contained in a message transmitted via the device bus (80) in a first period after scanning the communication edge following this period and after determining the time base in the subsequent, second period.

9. Method for synchronizing power modules (10, .., 60) of a power electronic system (1), in particular a converter, for operating a load (5), the system (1) being configured according to one of Claims 1 to 8,
**characterized in that**
- the control signals for actuating the number of power modules (10, .., 60) for the switching states of the system (1) are transmitted in respective messages (200) at predefined intervals of time (T) from the controller (70) to the number of power modules (10, .., 60) via the device bus (80), and
- a first communication edge (201) of a respectively received message (200) from the controller (70) is scanned and is processed as a common time base of the system (1) for processing the control signals.

10. Method according to Claim 9, in which the messages (200) are emitted at regular intervals of time.

11. Method according to Claim 9 or 10, in which the messages (200) transmitted by the controller (70) via the device bus (80) have an identical or different length for a constant period duration.

12. Method according to one of Claims 9 to 11, in which return messages emitted by a power module (10, .., 60) are transmitted to the controller (70) via the device bus (80) in the pauses (210) between the messages (200).

13. Method according to one of Claims 9 to 12, in which the power modules (10, .., 60) generate a synchronization pulse after scanning the first communication edge (201) of a respectively received message (200) from the controller (70) and process said synchronization pulse as a time base in the respective local actuator.

14. Method according to one of Claims 9 to 13, in which the power modules (10, .., 60) execute the control signals contained in a message transmitted via the device bus (80) in a first period after scanning the communication edge following this period and after determining the time base in the subsequent, second period.

## Revendications

1. Système électronique de puissance, notamment convertisseur, pour faire fonctionner une charge (5), comprenant :
- un certain nombre de modules (10,...,60) de puissance , qui sont connectés d'une façon donnée à l'avance à la charge (5), chacun des modules (10,...,60) de puissance comprenant au moins un élément (11,..., 61) de coupure et une commande (12,..., 62) locale ;
- une commande (70) supérieure hiérarchiquement d'émission de signaux de commande appropriés pour la commande du nombre de modules (10,..., 60) de puissance afin de faire fonctionner la charge (5) ;
- un bus d'appareil, auquel sont raccordés la commande (70) supérieure hiérarchiquement et le nombre de modules (10,..., 60) de puissance et par lequel, lorsque le système (1) est en fonctionnement, les signaux de commande pour la commande du nombre de modules (10,..., 60) de puissance sont transmis ou peuvent l'être,
**caractérisé en ce que**
- la commande (70) supérieure hiérarchiquement est constituée pour transmettre au nombre de modules (10,...,60) de puissance par le bus (80) d'appareil les signaux de commande pour la commande du nombre de modules (10,..., 60) de puissance pendant les états de commutation du système (1) dans des télégrammes (200) respectifs dans des intervalles de temps donnés à l'avance,
- tous les modules (10,...,60) de puissance sont constitués pour analyser un premier front (201) de communication d'un télégramme (200) reçu respectivement de la commande (70) et pour le traiter comme base de temps commune du système (1) pour le traitement des signaux de commande.

2. Système suivant la revendication 1 dans lequel le module (10,..., 60) de puissance est un convertisseur.

3. Système suivant la revendication 1 dans lequel le module (10,...,60) de puissance est un élément de coupure individuel pouvant être commandé ou une pluralité d'éléments de coupure individuels montés en série et/ou en parallèle.

4. Système suivant l'une des revendications précédentes, dans lequel la commande est constituée pour envoyer un télégramme (200) à des intervalles de temps réguliers.

5. Système suivant l'une des revendications précédentes, dans lequel les télégrammes (200) transmis par la commande (70) par l'intermédiaire du bus (80) d'appareil ont, à période constante, une longueur égale ou une longueur différente.

6. Système suivant l'une des revendications précédentes, dans lequel des télégrammes d'accusé de réception, émis par un module (10,..., 60) de puissance dans les intervalles de temps (210) entre les télégrammes (200), peuvent être transmis à la commande (70) par l'intermédiaire du bus (80) d'appareil.

7. Système suivant l'une des revendications précédentes, dans lequel les modules (10,...,60) de puissance sont constitués chacun pour, après l'analyse du premier front (201) de communication d'un télégramme (200) reçu respectivement de la commande (70), produire une impulsion de synchronisation et la traiter comme base de temps dans la commande locale respective.

8. Système suivant l'une des revendications précédentes, dans lequel les modules (10,...,60) de puissance sont constitués chacun pour exécuter les signaux de commande contenus dans un télégramme, transmis dans une première période par l'intermédiaire du bus (80) d'appareil, après l'analyse du front de communication suivant cette période et la détermination de la base de temps dans la deuxième période suivante.

9. Procédé de synchronisation de modules (10,..., 60) de puissance d'un système (1) électronique de puissance, notamment d'un convertisseur, afin de faire fonctionner une charge (5), le système (1) étant conformé suivant l'une des revendications 1 à 8, **caractérisé en ce que**
- on transmet les signaux de commande, pour la commande du nombre de modules (10,...,60) de puissance pendant les états de commutation du système (1) dans des télégrammes (200) respectifs à des intervalles (T) de temps donnés à l'avance, par la commande au nombre de modules (10,..., 60) de puissance par l'intermédiaire du bus (80) d'appareil et
- on analyse un premier front (201) de communication d'un télégramme (200) reçu respectivement de la commande (70) et on le traite comme base de temps commune du système (1) pour le traitement des signaux de commande.

10. Procédé suivant la revendication 9, dans lequel on envoie les télégrammes (200) à des intervalles de temps réguliers.

11. Procédé suivant la revendication 9 ou 10, dans lequel les télégrammes (200) transmis par la commande (70) par l'intermédiaire du bus (80) d'appareil ont, à période constante, une longueur égale ou une longueur différente.

12. Procédé suivant l'une des revendications 9 à 11, dans lequel on transmet à la commande (70) par l'intermédiaire du bus (80) d'appareil des télégrammes d'accusé de réception envoyés par un module (10,..., 60) de puissance dans les intervalles de temps (210) entre les télégrammes (200).

13. Procédé suivant l'une des revendications 9 à 12, dans lequel les modules (10,..., 60) de puissance produisent, après l'analyse des premiers fronts (201) de communication d'un télégramme (200) reçu respectivement de la commande (70), une impulsion de synchronisation et traitent celle-ci comme base de temps dans la commande locale respective.

14. Procédé suivant l'une des revendications 9 à 13, dans lequel les modules (10,..., 60) de puissance exécutent les signaux de commande contenus dans un télégramme, transmis dans une première période par l'intermédiaire du bus (80) d'appareil, après l'analyse des fronts de communication suivant cette période et la détermination de la base de temps dans la deuxième période suivante.
